# EUROPEAN PATENT APPLICATION

(11) **EP 4 307 435 A1**
(43) Date of publication of application: **17.01.2024**
(21) Application number: 21930469.8
(22) Date of filing: 26.08.2021
(51) Int. Cl.: H01M 10/54, H01M 10/42, H01M 10/44

(54) **DISCHARGE PROCESSING DEVICE, DISCHARGE PROCESSING METHOD, AND DISCHARGE PROCESSING SYSTEM FOR USED BATTERIES**

(30) Priority: 08.03.2021 KR 20210030225
(71) Applicant: Korea Institute of Industrial Technology, Cheonan-si, Chungcheongnam-do 31056 (KR)
(72) Inventor: KIM, Wongun, Jeonju-si, Jeollabuk-do 55057 (KR); KO, Jong-wan, Changwon-si, Gyeongsangnam-do 51499 (KR); LEE, Seungmin, Gimhae-si, Gyeongsangnam-do 51019 (KR)
(74) Representative: Marks & Clerk LLP
(86) International application number: PCT/KR2021/011423
(87) International publication number: WO 2022/191369

(57) **Abstract**

There are disclosed a discharge processing device, a discharge processing method, and a discharge processing system for used batteries. The discharge processing device for used batteries according to the present invention includes: at least one first discharge member connected to the cathodes of battery cells provided in a used battery module, a used battery pack, or a used battery rack; at least one second discharge member connected to the anodes of the battery cells; and a water tank body configured such that salt water is stored, the first discharge member and the second discharge member are immersed, and discharge is performed therein.

## Description

### Technical Field

The present invention relates to discharge processing technology for used batteries, and more particularly to a discharge processing device, discharge processing method, and discharge processing system for used batteries that allow discharge to be performed in salt water by using discharge plates connected to the anodes and cathodes of used batteries.

### Background Art

In general, the demand for lithium-ion batteries, which are charged and used, has increased explosively and exponentially as portable devices such as wireless phones, smartphones, and mobile devices are widely used. Recently, the use of battery packs each including a plurality of unit battery cells is increasing.

The battery packs each include a plurality of electrically connected battery modules. These battery packs are widely used in electric vehicles (EVs) or hybrid electric vehicles (HEVs) that require large electric capacities. Furthermore, a plurality of battery packs or a plurality of battery trays are gathered to form a battery rack, and lithium-ion batteries are also used in an energy storage system (ESS) provided in such a manner that a plurality of battery racks are gathered.

Electric vehicles and hybrid electric vehicles attract attention as next-generation means of transportation, and the number of such vehicles to be produced is expected to increase rapidly.

IHS Markit, which was a global market research firm, predicted that the electric vehicle battery market would grow at an average annual rate of 25% and reach $160 billion (about 186 trillion won) by 2025. The electric vehicle battery market will be larger than the memory semiconductor market, which is expected to reach $ 149 billion (about 173 trillion won) in 2025. In contrast, the shortage of lithium-ion batteries, which account for the majority of electric vehicle batteries, is predicted to become serious.

As a method for compensating for the shortage of the aforementioned lithium-ion battery, there is a method of recycling lithium-based batteries.

In the case of domestic lithium-based battery recycling companies, only completely discharged batteries are required for a warehousing condition in order to secure stability in the step of crushing lithium-based batteries.

Conventional electrical load-type discharge technology is inefficient because it requires expensive equipment for load control. In addition, the DC current of a used battery not only supplies a significantly large current, but also the amount of residual electricity is different for each used battery, so that the conventional electrical load-type discharge technology has the possibility of causing a large explosion with a powerful spark in the process of delivering the output of an inverting unit.

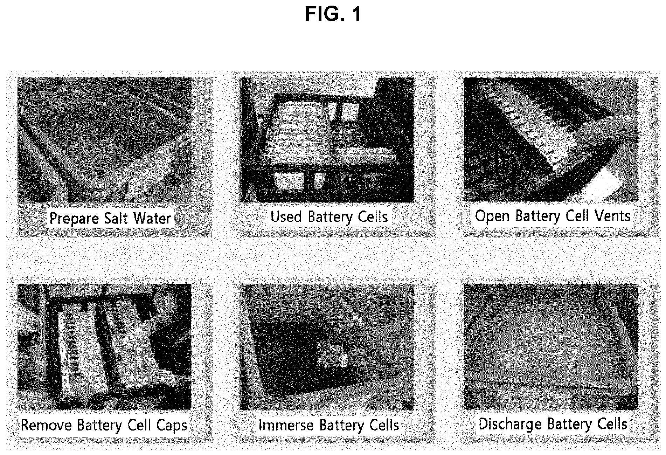

In order to overcome this problem, there is currently being used a method in which battery cells are immersed in salt water and completely discharged, which was proposed by battery manufacturers. More specifically, the conventional method of immersing battery cells in salt water and completely discharging them is performed by the method shown in FIG. 1. First, salt water is prepared, and then the vents of used battery cells are opened. Then, the caps of the used battery cells are removed, and then the battery cells are immersed in the salt water and discharged.

The above-described method has a disadvantage in that only a small amount of discharge is possible through percell discharge and takes about three days.

In addition, the above-described method requires a large amount of manpower to disassemble battery packs or a battery rack, has a limitation on the amount of discharge, and incurs additional costs required to dispose of by-products such as hydrogen, chlorine, sodium hydroxide, etc. without utilizing them.

Furthermore, there are many cases in which used battery cells are poured directly into salt water or submerged at once. In these cases, discharge is performed in a state in which many used battery cells overlap each other in salt water. In this process, the accumulation of heat occurs and there is a possibility that the accumulation may lead to ignition, so that remedial measures are required for this.

The above-described technical configuration is a background technology for helping the understanding of the present invention, and does not constitute the prior art widely known in the art to which the present invention pertains.

### [Prior Art Literature]

### [Patent Document]

Korean Patent Application Publication No. 2006-0027091 (filed by LG Chemical Co., Ltd.) published on March 27, 2006

### Disclosure

### Technical Problem

Therefore, a technical problem to be overcome by the present invention is to provide a discharge processing device, a discharge processing method, and a discharge processing system for used batteries that can eliminate the manpower and time required to disassemble battery packs or a battery rack into battery cells compared to the conventional method of the direct discharge of battery cells in salt water performed on a per-battery cell basis.

Another technical problem is to provide a discharge processing device, a discharge processing method, and a discharge processing system for used batteries that can increase a used battery discharge throughput per unit time because a discharge state may be directly checked and discharge may be performed on a per-battery pack basis or a per-battery rack basis

Another technical problem is to provide a discharge processing device, a discharge processing method, and a discharge processing system for used batteries that can create an added value by decomposing salt water into chlorine, hydrogen, and sodium hydroxide through separators during the operation of discharging used batteries and then capturing and collecting chlorine, hydrogen, and sodium hydroxide.

### Technical Solution

According to an aspect of the present invention, there is provided a discharge processing device for used batteries, the discharge processing device including: at least one first discharge member connected to the cathodes of battery cells provided in a used battery module, a used battery pack, or a used battery rack; at least one second discharge member connected to the anodes of the battery cells; and a water tank body configured such that salt water is stored, the first discharge member and the second discharge member are immersed, and discharge is performed therein.

The discharge processing device may further include a lifting means provided around the water tank body and configured to adjust the contact area or discharge speed between the first and second discharge members and the salt water by selectively elevating and lowering the first discharge member and the second discharge member.

The discharge processing device may further include at least one separator provided in the water tank body to utilize by-products generated during the discharge and configured to partition the region of the first discharge member and the region of the second discharge member from each other.

The first discharge member and the second discharge member may include a plate shape or a three-dimensional shape.

The separator may include material selected from the group consisting of consisting of fluorine-based sulfonated polymers and fluoropolymers, but is not limited thereto.

Furthermore, according to another aspect of the present invention, there is provided a discharge processing system for used batteries, the discharge processing system including: a discharge processing device configured to immerse at least one first discharge member and at least one second discharge member, connected to cathodes and anodes of battery cells provided in a used battery module, a used battery pack or a used battery rack, in salt water, and to perform discharge; and a control unit configured to adjust the contact area between the first and second discharge members and the salt water by selectively elevating and lowering the first discharge member and the second discharge member.

To capture by-products generated from the first discharge member and the second discharge member and enable the salt water to be reused, the discharge processing system may further include at least one separator configured to separate the at least one first discharge member and the at least one second discharge member from each other.

The discharge processing system may further include a salt water adjustment unit configured to adjust the concentration of the salt water stored in the water tank body of the discharge processing device.

The discharge processing system may further include a water supply valve configured to supply water to the water tank body of the discharge processing device.

The discharge processing system may further include a chlorine collection unit configured to collect chlorine generated in the water tank body of the discharge processing device.

The discharge processing system may further include a hydrogen collection unit configured to collect hydrogen generated in the water tank body of the discharge processing device.

Connecting at least one first discharge member to cathodes of battery cells provided in a used battery module, a used battery pack, or a used battery rack;
connecting at least one second discharge member to anodes of the battery cells;
Furthermore, according to still another aspect of the present invention, there is provided a discharge processing method for used batteries, the discharge processing method including: connecting at least one first discharge member to cathodes of battery cells provided in a used battery module, a used battery pack, or a used battery rack; connecting at least one second discharge member to anodes of the battery cells; and immersing the first discharge member and the second discharge member in a water tank body in which salt water is stored and performing discharge therein.

The discharge processing method may further include adjusting the contact area between the first and second discharge members and the salt water by selectively elevating and lowering the first discharge member and the second discharge member in performing the discharge.

The discharge processing method may further include: measuring the temperature of the battery cells in performing the discharge; and blocking the contact between the first and second discharge members and the salt water when the temperature of battery cells exceeds a set temperature.

### Advantageous Effects

The embodiments of the present invention allow discharge to be performed in the salt water by using the discharge plates connected to the cathodes and the anodes, so that the embodiments can eliminate the manpower and time required to disassemble battery packs or a battery rack into battery cells compared to the conventional method of the direct discharge of battery cells in salt water performed on a per-battery cell basis.

Furthermore, a discharge state may be directly checked and discharge may be performed on a per-battery pack basis or a per-battery rack basis, so that a used battery discharge throughput per unit time can be increased.

Moreover, current control (electrode height adjustment) can be performed according to the continuous temperature of each part generated during the discharging of a battery, so that discharge processing efficiency can be increased and the risk of fire attributable to excessive discharge can be reduced.

In addition, the battery cells are not discharged in an overlapping state, so that heat accumulation does not occur during discharging, thereby preventing battery cells from being ignited.

Furthermore, in the present embodiment, when the temperature of the battery cells increases abnormally, the first and second discharge members are raised using the lifting means so that they are not submerged in salt water, or the controller discharges the salt water, stored in the storage body, to the outside of the storage body by opening the discharge valve, thereby rapidly dealing with an emergency situation.

### Description of Drawings

FIG. 1 is a view schematically showing a conventional discharge processing process for used batteries;
FIG. 2 show views schematically illustrating a discharge processing system for used batteries according to an embodiment of the present invention;
FIG. 3 is a diagram schematically showing discharging the discharge processing device for used batteries shown in FIG. 2 and a plurality of battery cells connected thereto;
FIG. 4 is a view schematically showing the configuration of FIG. 3 in which a separator is omitted;
FIG. 5 is another embodiment of the first and second discharge members shown in FIG. 3;
FIG. 6 is a diagram schematically showing changes in the amount of current according to the locations of the first and second discharge members in the discharge process shown in FIG. 3; and
FIG. 7 is a flowchart schematically illustrating a discharge processing method for used batteries according to the present embodiment.

### Best Mode

Embodiments of the present invention will be described in detail below with reference to the accompanying drawings.

In order to fully understand the present invention, the operational advantages of the present invention, and the objects achieved by the practice of the present invention, reference should be made to the accompanying drawings illustrating preferred embodiments of the present invention and the descriptions provided in the accompanying drawings.

Hereinafter, the present invention will be described in detail by describing preferred embodiments of the present invention with reference to the accompanying drawings. The same reference numerals throughout the individual drawings denote the same components.

In the present embodiment, a battery module may be a battery assembly in which a predetermined number of battery cells are bundled and placed in a frame to protect the battery cells from external impact, heat, and vibration, a battery pack may be prepared by gathering a plurality of battery modules, and a battery rack may be prepared by gathering a plurality of battery packs.

Furthermore, the present embodiment may be provided in a form in which battery cells may be directly mounted in a battery pack without a battery module, and a battery module is the final form of a battery system installed in an electric vehicle, and may be prepared by mounting various control and protection systems such as a battery management system (BMS) and a cooling system thereon.

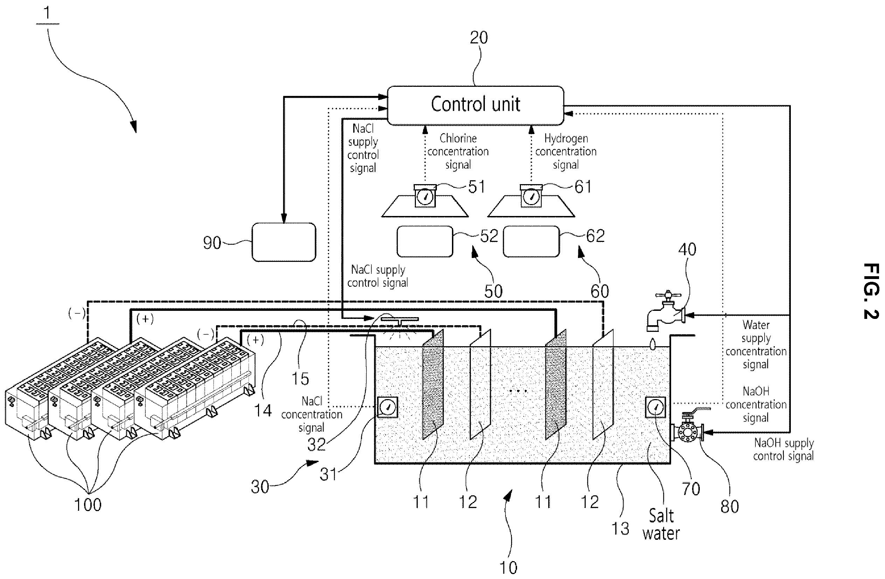

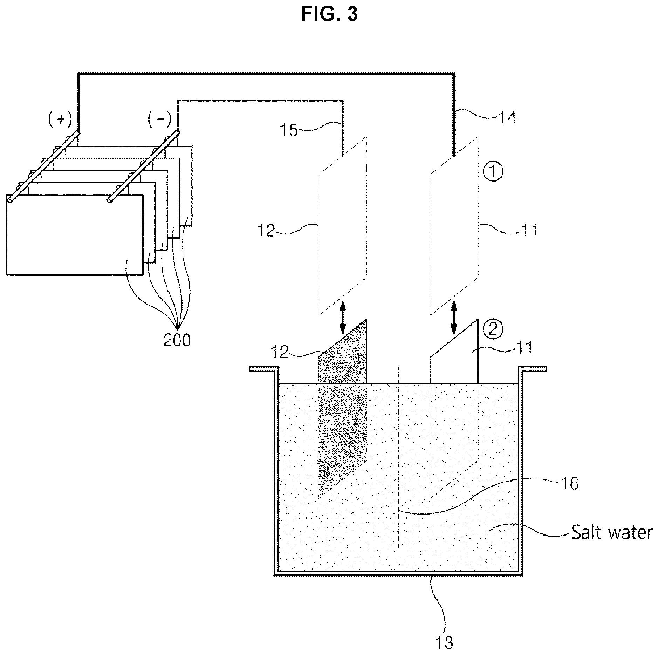

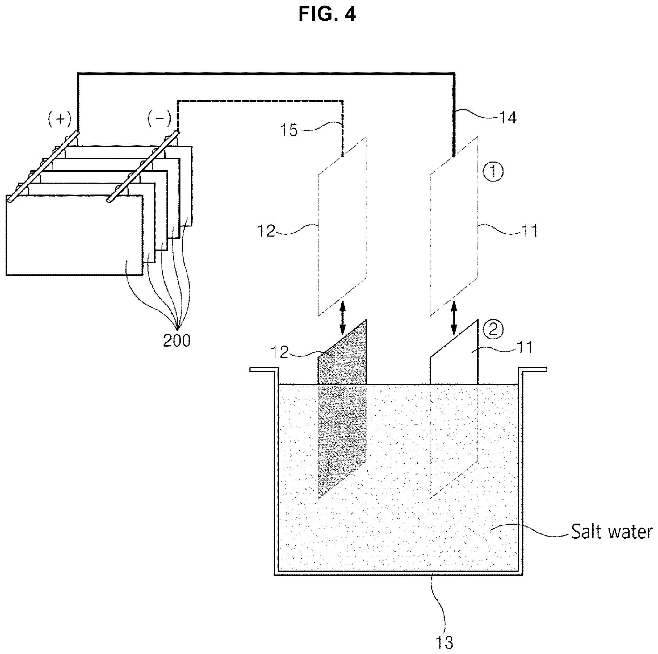

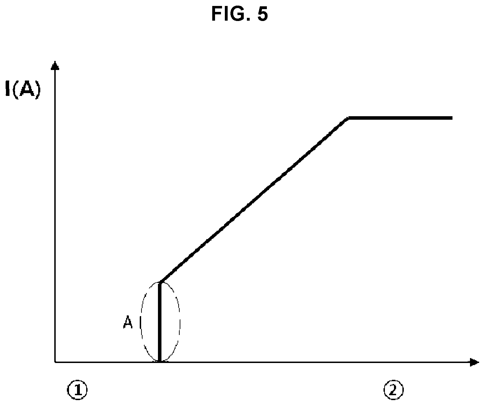

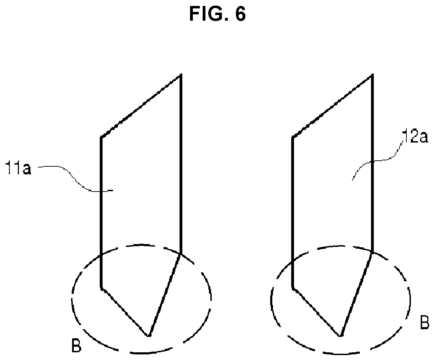

FIG. 2 show views schematically illustrating a discharge processing system for used batteries according to an embodiment of the present invention, FIG. 3 is a diagram schematically showing discharging the discharge processing device for used batteries shown in FIG. 2 and a plurality of battery cells connected thereto, FIG. 4 is a view schematically showing the configuration of FIG. 3 in which a separator is omitted, FIG. 5 is another embodiment of the first and second discharge members shown in FIG. 3, and FIG. 6 is a diagram schematically showing changes in the amount of current according to the locations of the first and second discharge members in the discharge process shown in FIG. 3.

As shown in these drawings, the discharge processing system 1 for used batteries according to the present embodiment includes: a discharge device 10 connected to the cathodes and anodes of the battery cells 200 provided in used battery modules 100, used battery packs, or a used battery rack, and configured to discharge the battery cells 200; a control unit 20 configured to adjust the area of contact between the first and second discharge members 11, 11a, 12, and 12a of the discharge device 10 and salt water; a salt water adjustment unit 30 configured to adjust the concentration of salt water stored in the water tank body 13 of the discharge device 10; a water supply valve 40 configured to supply water to the tank body 13 of the discharge device 10; a chlorine collection unit 50 configured to collect chlorine generated in the water tank body 13 of the discharge device 10; a hydrogen collection unit 60 configured to collect hydrogen generated in the tank body 13 of the discharge device 10; a sodium hydroxide concentration sensor 70 configured to detect the concentration of sodium hydroxide provided in the water tank body 13 of the discharge device 10; a discharge valve 80 provided in the tank body 13 of the discharge device 10 and configured to discharge generated sodium hydroxide to the outside of the tank body 13 or to discharge salt water to the outside of the tank body 13 in an emergency; and a power control device 90 connected to the control unit 20.

The discharge device 10 may be connected to the cathodes and anodes of the battery cells 200 provided in the used battery modules 100, the used battery packs, or the used battery rack, and may discharge the battery cells 200.

As shown in FIGS. 2 and 3, the discharge device 10 includes: the first discharge members 11 connected to the cathodes of the plurality of battery cells 200 provided in the used battery modules 100; the second discharge members 12 connected to the anodes of the battery cells 200; the water tank body 13 configured such that salt water is stored, the first discharge members 11 and the second discharge members 12 are immersed, and discharge is performed therein; first connection members 14 configured to electrically connect the first discharge members 11 to the cathodes of the battery cells 200; second connection members 15 configured to electrically connect the second discharge members 12 to the anodes of the battery cells 200; and separators 16 provided in the water tank body 13, and configured to partition the first discharge members 11 and the second discharge members 12 and to serve as passages of movement for lithium ions.

As shown in FIG. 1, each of the first discharge members 11 of the discharge device 10 is connected to the anodes of the battery cells 200 by the first connection member 14, and may be provided in a shape including a plate shape.

In the present embodiment, when the first discharge member 11 and the corresponding second discharge member 12 are immersed in the salt water stored in the water tank body 13, the current may increase vertically in the area indicated by 'A' in FIG. 5 and then increase with a predetermined inclination. In other words, the amount of current may be changed according to the surface area where the first discharge member 11 and the second discharge member 12 come into contact with salt water.

In the present embodiment, in order to prevent a rapid increase in the amount of current in the area indicated by 'A' in FIG. 5, the lower ends of the first discharge member 11a and the second discharge member 12a are provided to be sharp as in the area indicated by 'B' in FIG. 6. In this case, when the first discharge member 11a and the second discharge member 12a are immersed in salt water, the contact surface areas of the first discharge member 11a and the second discharge member 12a that are immersed in salt water are gradually increased due to the pointed portions indicated by 'B's in FIG. 6, so that there is an advantage in that the change in the amount of current can be moderated. In the present embodiment, the first discharge member 11 and the second discharge member 12 may be provided in various shapes including three-dimensional shapes such as polygon, cone, or column shapes, and may be provided without the above-described sharp portions.

Furthermore, in the present embodiment, the first discharge member 11 may be made of material containing nickel (Ni).

Furthermore, in the present embodiment, the first discharge member 11 and the second discharge member 12 may be provided to be selectively elevated and lowered in the direction of the water tank body 13 by a lifting means (not shown) connected to and controlled by the control unit 20. In the present embodiment, the lifting means may be provided, for example, around the water tank body 13, and may include a lifting frame (not shown) configured such that the upper end thereof is disposed in the upper portion of the water tank body 13, and a lifting part formed such that the upper portion thereof is coupled to the upper end of the lifting frame and the lower portion thereof is coupled to the first discharge member 11 and the second discharge member 12 and configured to selectively elevate and lower the first discharge member 11 and the second discharge member 12. In the present embodiment, the lifting part may include, for example, a clamp (not shown) configured to hold the first discharge member 11 and the second discharge member 12, and a cylinder (not shown) formed such that one side thereof is connected to the clamp and the other side thereof is coupled to the upper end of the elevating frame and configured to selectively elevate and lower the clamp. In the present embodiment, the clamp may be operated by hydraulic pressure or pneumatic pressure and may selectively clamp and release the first discharge member 11 and the second discharge member 12.

In addition, in the present embodiment, each of the first discharge member 11 and the second discharge member 11 may include a plurality of discharge members. Furthermore, in the present embodiment, a plurality of battery cells 200 may be connected to one first discharge member 11, which may also be applied to the second discharge member 12. As shown in FIG. 2, the second discharge member 12 of the discharge device 10 is connected to the anodes of the battery cells 200 by the second connection member 15, and may be provided in a shape including a plate shape.

In the present embodiment, the second discharge member 12 may be provided such that the lower end thereof is sharp as described above.

Furthermore, in the present embodiment, the second discharge member 12 may be made of material including titanium (Ti).

As shown in FIGS. 2 and 3, the water tank body 13 of the discharge device 10 may store salt water therein. The first discharge member 11 and the second discharge member 12 are immersed in salt water so that discharge can be performed. In the present embodiment, the concentration of the salt water stored in the water tank body 13 may be 3 to 10 wt%.

In the present embodiment, the top of the water tank body 13 may be provided to be open, and the first discharge member 11 and the second discharge member 12 may be selectively elevated and lowered in the height direction of the water tank body 13 by the above-described lifting means.

The first connection member 14 of the discharge device 10 may electrically connect the first discharge member 11 and the cathodes of the battery cells 200, and may include a wire cable having known tweezers.

The second connection member 15 of the discharge device 10 may electrically connect the second discharge member 12 and the anodes of the battery cells 200, and may include a wire cable having known tweezers.

As shown in FIG. 3, each of the separators 16 of the discharge device 10 may be provided inside the water tank body 13, and may partition the first discharge member 11 and the second discharge member 12 from each other and serve as a catalyst for electrolyzing salt water and moving ions during the discharging of the battery cells 200. In other words, in the present embodiment, when the battery cells 200 are discharged, salt water may be decomposed into chlorine, hydrogen, and sodium hydroxide by the separator 16.

In the present embodiment, the separator 16 may include material selected from the group consisting of fluorine-based sulfonated polymers and fluoropolymers.

Meanwhile, the present embodiment may be used without the separator 16, as shown in FIG. 4.

The control unit 20 may be provided in the water tank body 13 or a separately provided case, and may selectively elevate and lower at least one first discharge member 11 and at least one second discharge member 12 by controlling the above-described lifting means.

In the present embodiment, as shown in FIG. 2, the control unit 20 may be connected to the salt water adjustment unit 30, and may supply salt water to the water tank body 13 when the concentration of salt water stored in the water tank body 13 is lower than a reference value and supply water to the water tank body 13 by opening the water supply valve 40 when the concentration of salt water stored in the water tank body 13 is equal to or higher than the reference value.

Furthermore, in the present embodiment, when the discharge of the battery cells 200 is completed, the control unit 20 may collect chlorine, contained in the water tank body 13, to the outside of the tank body 13 by operating the chlorine collection unit 50 configured to collect chlorine in the water tank body 13.

In addition, in the present embodiment, when the discharge of the battery cells 200 is completed, the control unit 20 may collect hydrogen, contained in the water tank body 13, to the outside of the water tank body 13 by operating the hydrogen collection unit 60 configured to collect hydrogen in the water tank body 13.

In addition, in the present embodiment, when the discharge of the battery cells 200 is completed, the control unit 20 may measure the concentration of sodium hydroxide generated in the water tank body 13 through the sodium hydroxide concentration sensor 70, and may discharge sodium hydroxide to the outside of the water tank body 13 by opening the discharge valve 80 provided in the water tank body 13 when a required concentration is satisfied.

Furthermore, in the present embodiment, as shown in FIG. 2, the control unit 20 may be connected to the power control device 90 and may control power required for the operation of the present embodiment.

The salt water adjustment unit 30 may be connected to the control unit 20, and may adjust the concentration of the salt water stored in the water tank body 13.

In the present embodiment, as shown in FIG. 2, the salt water adjustment unit 30 may include a salt water concentration sensor 31 provided inside the water tank body 13 and configured to detect the concentration of salt water, and a salt water supply valve 32 provided on a salt water supply line connected to the water tank body 13, connected to the control unit 20, and configured to selectively open and close the salt water supply line.

In the present embodiment, when the concentration of the salt water stored in the water tank body 13 is lower than a preset concentration, e.g., 3 to 10 wt%, the salt water concentration sensor 31 may detect it and send a signal to the control unit 20, and the control unit 20 may supply salt water into the water tank body 13 by opening the salt water supply valve 32 based on this signal, thereby adjusting the concentration of the salt water to the preset concentration. In contrast, when the concentration of the salt water stored in the water tank body 13 is higher than the preset concentration, e.g., 3 to 10 wt%, the salt water concentration sensor 31 may detect it and sends a signal to the control unit 20, and the control unit 20 may supply water into the water tank body 13 by opening the water supply valve 40 based on this signal, thereby lowering the concentration of the salt water to the preset concentration.

As shown in FIG. 2, the water supply valve 40 may be provided on the water tank body 13 to supply water into the water tank body 13.

In the present embodiment, when the concentration of the salt water stored in the tank body 13 is higher than a preset concentration, the water supply valve 40 may be operated by the control unit 20 as described above and supply water into the tank body 13, thereby lowering the concentration of the salt water.

The chlorine collection unit 50 may collect chlorine, generated during the operation of discharging the battery cells 200, to the outside of the water tank body 13.

In the present embodiment, as shown in FIG. 2, the chlorine collection unit 50 includes the chlorine concentration sensor 31 connected to the control unit 20 and configured to send a chlorine concentration signal to the control unit 20, and a chlorine storage tank 52 provided outside the water tank body 13 and configured to store chlorine generated in the water tank body 13.

In the present embodiment, when the battery cells 200 are discharged, chloride ions (Cl-) and hydroxide ions (OH- ), which are (-) ions, are attracted to the first discharge members 11, which are (+) electrodes. Among them, chloride ions, which tend to lose electrons, give up electrons to become chlorine gas (Cl2), and hydroxide ions (OH-) remain in the solution. The chlorine gas drawn to the first discharge member 11 of the present embodiment and turned into gas may be supplied to and stored in the chlorine storage tank 52. In the present embodiment, a known salt water electrolysis method may be applied as a technical means for supplying chlorine gas from the water tank body 13 to the chlorine storage tank 52.

In addition, in the present embodiment, in order to prevent chlorine gas or hydrogen gas, generated during the operation of discharging the battery cells 200, from being discharged to the outside of the water tank body 13, the top of the water tank body 13, except for a region through which the cylinder of the lifting means described above passes, may be provided to be sealed

The hydrogen collection unit 60 may collect hydrogen, generated during the operation of discharging the battery cells 200, to the outside of the water tank body 13.

In the present embodiment, as shown in FIG. 2, the hydrogen collection unit 60 includes a hydrogen concentration sensor 61 connected to the control unit 20 and configured to send a hydrogen concentration signal to the control unit 20, and a hydrogen storage tank 62 provided outside the water tank body 13 and configured to store hydrogen generated in the water tank body 13.

In the present embodiment, when the battery cells 200 are discharged, sodium ions (Na+) and hydrogen ions (H+), which are (+) ions, are attracted to the second discharge members 12, which are (-) electrodes. Among them, hydrogen ions (H+), which tend to obtain electrons, gain electrons and become hydrogen gas (H₂), and sodium ions (Na+) remain in the solution. Hydrogen gas drawn into gas by the second discharge members 12 of the present embodiment may be supplied to and stored in the hydrogen storage tank 62. In the present embodiment, a known salt water electrolysis method may be applied as a technical means for supplying hydrogen gas from the water tank body 13 to the hydrogen storage tank 62.

As shown in FIG. 2, the sodium hydroxide concentration sensor 70 may be provided inside the water tank body 13, and may send a signal for the concentration of sodium hydroxide (NaOH), generated during discharge, to the control unit 20.

As shown in FIG. 2, the discharge valve 80 may be provided on the water tank body 13, may be connected to the control unit 20, and may be operated. In other words, when the discharge of the battery cells 200 is completed, the control unit 20 may discharge the sodium hydroxide, provided in the water tank body 13, to the outside of the water tank body 13 by opening the discharge valve 80 based on a signal from the sodium hydroxide concentration sensor 70.

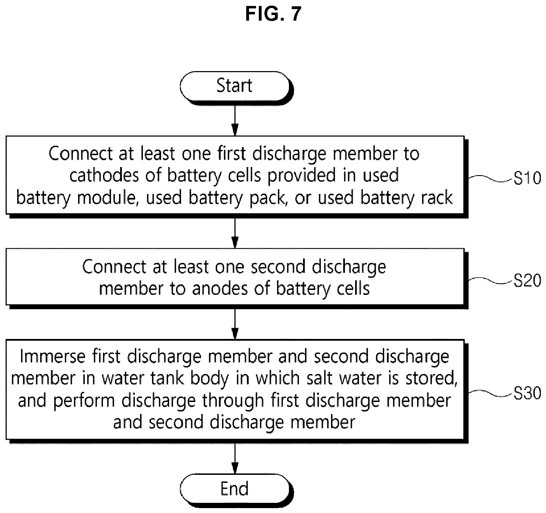

FIG. 7 is a flowchart schematically illustrating a discharge processing method for used batteries according to the present embodiment.

The discharge processing method for used batteries according to the present embodiment includes: step S10 of connecting the first discharge members 11 to the cathodes of the battery cells 200 provided in the used battery modules 100, the used battery packs, or the used battery rack; step S20 of connecting the second discharge members 12 to the anodes of the battery cells 200; and step S20 of immersing the first discharge members 11 and the second discharge members 12 in the water tank body 13 in which salt water is stored and performing discharge through the first discharge members 11 and the second discharge members 12.

In the present embodiment, discharge is performed in the salt water by using the first discharge members 11 and the second discharge members 12 connected to the cathodes and the anodes, respectively, so that the present embodiment can eliminate the manpower and time required to disassemble the battery packs or the battery rack into the unit battery cells 200 compared to the conventional method of the direct discharge of the battery cells 200 in salt water performed on a per-battery cell 200 basis. Furthermore, a discharge state may be directly checked and discharge may be performed on a per-battery pack basis or a per-battery rack basis, so that a used battery discharge throughput per unit time can be increased.

The present embodiment may further include the step of adjusting the area in contact with salt water by selectively elevating and lowering the first discharge members 11 and the second discharge members 12 in the discharging step.

In addition, the present embodiment may further include the step of measuring the temperature of the battery cells 200 in the discharging step, and the step of blocking the contact between at least one first discharging member 11 and at least one second discharge member 12 and the salt water when the temperature of the plurality of battery cells 200 exceeds a set temperature.

In the present embodiment, the measurement of the temperature of the battery cells 200 may be provided by mounting a temperature sensor (not shown) on the battery cells 200.

In the present embodiment, when the temperature of the plurality of battery cells 200 exceeds the set temperature, the contact between the first discharge member 11 and the second discharge member 12 and the salt water is blocked by the method of elevating the first discharge member 11 and the second discharge member 12 using the above-described lifting means so that they are not submerged in the salt water. Alternatively, this may be performed by a method in which the control unit 20 may discharge the salt water stored in the water tank body 13 to the outside of the water tank body 13 by opening the discharge valve 80.

As described above, the present invention is not limited to the described embodiments, and it is obvious to those skilled in the art that various modifications and alterations may be made without departing from the spirit and scope of the present invention. Therefore, it should be understood that such modifications or alterations fall within the scope of the claims of the present invention.

## Claims

1. A discharge processing device for used batteries, the discharge processing device comprising:
at least one first discharge member connected to cathodes of battery cells provided in a used battery module, a used battery pack, or a used battery rack;
at least one second discharge member connected to anodes of the battery cells; and
a water tank body configured such that salt water is stored, the first discharge member and the second discharge member are immersed, and discharge is performed therein.

2. The discharge processing device of claim 1, further comprising a lifting means provided around the water tank body, and configured to adjust a contact area between the first and second discharge members and the salt water by selectively elevating and lowering the first discharge member and the second discharge member.

3. The discharge processing device of claim 1, wherein the first discharge member and the second discharge member include a plate shape or a three-dimensional shape.

4. The discharge processing device of claim 1, wherein the at least one first discharge member and the at least one second discharge member have sharp portions that first come into contact with the salt water.

5. The discharge processing device of claim 1, further comprising at least one separator provided in the water tank body and configured to partition a region of the first discharge member and a region of the second discharge member and to electrolyze the salt water.

6. The discharge processing device of claim 5, wherein the separator includes material selected from the group consisting of consisting of fluorine-based sulfonated polymers and fluoropolymers.

7. A discharge processing system for used batteries, the discharge processing system comprising:
a discharge processing device configured to immerse at least one first discharge member and at least one second discharge member, connected to cathodes and anodes of battery cells provided in a used battery module, a used battery pack or a used battery rack, in salt water, and to perform discharge; and
a control unit configured to adjust a contact area between the first and second discharge members and the salt water by selectively elevating and lowering the first discharge member and the second discharge member.

8. The discharge processing system of claim 7, further comprising at least one separator provided in the water tank body, and configured to partition a region of the first discharge member and a region of the second discharge member and to electrolyze the salt water.

9. The discharge processing system of claim 7, further comprising a salt water adjustment unit configured to adjust a concentration of the salt water stored in the water tank body of the discharge processing device.

10. The discharge processing system of claim 7, further comprising a water supply valve configured to supply water to the water tank body of the discharge processing device.

11. The discharge processing system of claim 7, further comprising a chlorine collection unit configured to collect chlorine generated in the water tank body of the discharge processing device.

12. The discharge processing system of claim 7, further comprising a hydrogen collection unit configured to collect hydrogen generated in the water tank body of the discharge processing device.

13. A discharge processing method for used batteries, the discharge processing method comprising:
connecting at least one first discharge member to cathodes of battery cells provided in a used battery module, a used battery pack, or a used battery rack;
connecting at least one second discharge member to anodes of the battery cells; and
immersing the first discharge member and the second discharge member in a water tank body in which salt water is stored and performing discharge therein.

14. The discharge processing method of claim 13, further comprising adjusting a contact area between the first and second discharge members and the salt water by selectively elevating and lowering the first discharge member and the second discharge member in performing the discharge.

15. The discharge processing method of claim 13, further comprising:
measuring a temperature of the battery cells in performing the discharge; and
blocking contact between the first and second discharge members and the salt water when the temperature of battery cells exceeds a set temperature.
